# DEMANDE DE BREVET EUROPEEN

(11) **EP 4 279 342 A1**
(43) Date de publication de la demande: **22.11.2023**
(21) Numéro de dépôt: 23173986.3
(22) Date de dépôt: 17.05.2023
(51) Int. Cl.: B60S 1/38, B60S 1/40

(54) **DISPOSITIF DE CONNEXION D'UN BALAI D' ESSUYAGE**

(30) Priorité: 19.05.2022 FR 2204812
(71) Demandeur: Valeo Systèmes d'Essuyage, 78322 Le Mesnil Saint Denis (FR)
(72) Inventeur: HOUSSAT, Stephane, 63500 ISSOIRE (FR); GAUCHER, Vincent, 63500 ISSOIRE (FR); MOULEYRE, Guillaume, 63500 ISSOIRE (FR); JOMARD, Olivier, 63500 ISSOIRE (FR)
(74) Mandataire: Valeo Visibility

(57) **Abrégé**

La présente invention concerne un dispositif de connexion (8) pour véhicule destiné à relier un balai d'essuyage (2) s'étendant principalement longitudinalement à un bras d'essuie-glace (119, 270), ce dispositif de connexion (8) comprenant un module de connexion (12) et un organe de couverture (22) recouvrant au moins le module de connexion (12), caractérisé en ce que cet organe de couverture (22) comporte une cloison supérieure (206) et deux cloisons latérales (208) jointes par cette cloison supérieure (206), au moins une des cloisons latérales (208) comportant une zone de réception d'un type de bras d'essuie-glace (270) formée par un dégagement de matière (230) à partir de la cloison supérieure (206).

## Description

La présente invention concerne le domaine des systèmes d'essuyage de surfaces vitrées pour véhicules automobiles, et plus particulièrement les dispositifs de connexion permettant de connecter un balai d'essuyage à un bras d'essuie-glace dans de tels systèmes d'essuyage.

Les véhicules automobiles sont couramment équipés de systèmes d'essuyage destinés à nettoyer leurs surfaces vitrées, et notamment leur pare-brise. De tels systèmes d'essuyage comprennent au moins un bras d'essuie-glace et un balai d'essuyage entraîné par le bras d'essuie-glace. Le bras d'essuie-glace est relié à un moteur électrique du véhicule et le balai d'essuyage comprend au moins une lame d'essuyage destinée à venir au contact de la surface vitrée à essuyer.

Afin de pouvoir entraîner le balai d'essuyage, un dispositif de connexion est agencé entre ce balai d'essuyage et le bras d'essuie-glace. Plus particulièrement, le dispositif de connexion comprend un adaptateur agencé entre le bras d'essuie-glace et un connecteur relié au balai d'essuyage. L'adaptateur est alors solidaire du bras d'essuie-glace et plus particulièrement d'une extrémité libre du bras d'essuie-glace, et il est monté pivotant sur le connecteur, pour permettre un montage pivotant du balai d'essuyage sur le bras d'essuie-glace. Une telle coopération est amovible de sorte qu'elle permet de changer le balai d'essuyage lorsque celui-ci est usé.

Le dispositif de connexion tel qu'il vient d'être décrit doit d'une part être configuré pour répondre à des critères mécaniques pour permettre la fixation d'un balai d'essuyage sur un bras d'essuie-glace associé, et d'autre part répondre à des critères esthétiques et aérodynamiques et comporter un organe de couverture qui cache les éléments pivotants les uns par rapport aux autres.

Différents types de bras d'essuie-glace équipent actuellement les véhicules automobiles, forçant les équipementiers automobiles à concevoir différents adaptateurs spécifiques à chaque type de bras, un adaptateur faisant spécifiquement le lien entre un type de bras d'essuie-glace et un connecteur. Cette caractéristique d'une part pousse les équipementiers à développer de nombreux adaptateurs différents, dont au moins un pour chaque type de bras d'essuie-glace commercialisé, et d'autre part oblige les utilisateurs devant changer leur balai d'essuyage à s'adapter et à redoubler d'attention pour choisir le bon adaptateur en fonction du type de bras d'essuie-glace sur lequel doit être monté le balai d'essuyage.

La présente invention s'inscrit dans ce double contexte en proposant un dispositif de connexion entre un balai d'essuyage et un bras d'essuie-glace qui est standard, c'est-à-dire un dispositif de connexion permettant de relier un balai d'essuyage à un grand nombre de types de bras d'essuie-glace différents commercialisés actuellement, et qui répond à des critères esthétiques et aérodynamiques en incorporant dans ce dispositif de connexion un organe de couverture.

La présente invention a ainsi pour principal objet un dispositif de connexion pour véhicule destiné à relier un balai d'essuyage s'étendant principalement longitudinalement à un bras d'essuie-glace, ce dispositif de connexion comprenant un module de connexion, et un organe de couverture recouvrant au moins le module de connexion. Selon l'invention, cet organe de couverture comporte une cloison supérieure et deux cloisons latérales jointes par cette cloison supérieure, au moins une des cloisons latérales comportant une zone de réception d'un premier type de bras d'essuie-glace formée par un dégagement de matière à partir de la cloison supérieure.

Un tel dispositif de connexion permet donc de relier un balai d'essuyage à un bras d'essuie-glace par l'intermédiaire de différents composants, qui comprennent ici un connecteur, un module de connexion et un organe de couverture. Cet organe de couverture présente une configuration telle qu'il peut recouvrir d'autres composants du dispositif de connexion et conférer à l'ensemble une esthétique améliorée, tout en permettant la coopération de différents types de bras d'essuie-glace avec le module de connexion.

Plus particulièrement, l'organe de couverture présente une section sensiblement en forme de U composée de la cloison supérieure et des cloisons latérales s'étendant à partir de celle-ci, une telle forme lui permettant de recouvrir au moins le module de connexion de façon optimale. L'organe de couverture est par ailleurs configuré pour coopérer avec au moins un premier type de bras, de manière à intégrer des fonctions de fixation d'un type de bras et participer à la standardisation du dispositif de connexion pour la fixation de plusieurs types de bras d'essuie-glace. À cet effet, et tel qu'évoqué précédemment, il comporte notamment un dégagement de matière formant une échancrure à partir de la cloison supérieure, dimensionné pour pouvoir recevoir et coopérer avec un type de bras d'essuie-glace.

Le dégagement de matière, ou l'échancrure, est formé à partir d'un bord supérieur de la cloison latérale, qui peut être considéré comme la jonction entre une cloison latérale et la cloison supérieure de l'organe de couverture, et on comprend ainsi que l'échancrure s'étend le long de la cloison latérale depuis cette cloison supérieure.

Selon une autre caractéristique de l'invention, le module de connexion est formé par une base, montée en pivotement sur un connecteur, et une plateforme rotative, l'organe de couverture comportant des éléments de fixation configurés pour coopérer avec des moyens de connexion solidaires de la plateforme rotative. Lorsque l'organe de couverture est dans une position de recouvrement de ce module de connexion, et plus particulièrement de la plateforme rotative, l'assemblage ainsi formé est sécurisé grâce à ces moyens de connexion disposés sur la plateforme rotative.

Selon une autre caractéristique de l'invention, le module de connexion est configuré pour coopérer avec un adaptateur amovible, les moyens de connexion solidaires de la plateforme rotative étant portés par cet adaptateur amovible. On comprend que le dispositif de connexion peut prendre plusieurs configurations, selon que le module de connexion est complété d'un adaptateur amovible ou non. En présence d'un tel adaptateur, les moyens de connexion solidaires de la plateforme rotative ne sont alors plus portés directement par celle-ci mais par l'adaptateur amovible.

Selon une autre caractéristique de l'invention, l'organe de couverture comporte des ergots et/ou des renfoncements destinés à coopérer avec un capot du module de connexion. Ces ergots et/ou renfoncements peuvent être disposés à une extrémité longitudinale opposée à la forme arrondie. Les ergots forment des saillies longitudinales prolongeant les cloisons latérales de l'organe de couverture et les renfoncements sont dimensionnés pour recevoir partiellement le capot. Les ergots et les renfoncements sont disposés au voisinage les uns des autres, sur la même extrémité longitudinale, afin de coopérer simultanément avec un même capot lorsque celui-ci est rabattu sur une extrémité longitudinale du module de connexion. Lorsque ce capot est reçu dans des zones de réception formées par les renfoncements, il recouvre également les ergots de sorte que l'organe de couverture est bloqué en position sur le module de connexion.

Selon une autre caractéristique de l'invention, au moins la cloison latérale de l'organe de couverture opposée à la cloison latérale sur laquelle est disposée le dégagement de matière formant ladite zone de réception comporte un orifice traversant, cet orifice traversant étant destiné à recevoir une tige du bras d'essuie-glace. Un tel orifice traversant relie le logement interne de l'organe de couverture et l'espace extérieur à celui-ci. Lorsque le dispositif de connexion est assemblé pour relier un balai d'essuyage à un bras d'essuie-glace susceptible de coopérer avec l'organe de couverture tel que précédemment évoqué, une tige de ce bras d'essuie-glace est insérée au sein de cet orifice traversant. Le fait que cet orifice traversant soit disposé à l'opposé de l'échancrure permet d'enserrer l'organe de couverture avec des moyens embarqués sur le bras d'essuie-glace, à savoir d'un côté une paroi latérale portant la tige et de l'autre côté un bord de renvoi d'une patte de maintien.

Selon une caractéristique, l'organe de couverture est symétrique selon un plan de symétrie s'étendant entre les deux cloisons latérales le long de la direction d'allongement longitudinale, une extrémité de la cloison latérale au voisinage de la cloison supérieure étant moins éloignée de ce plan de symétrie qu'une extrémité de la cloison latérale à distance de cette cloison supérieure, l'orifice traversant étant bordé par un pourtour formant une surface d'appui plane sensiblement parallèle au plan de symétrie pour le bras d'essuie-glace.

Ce plan de symétrie s'étend donc selon la direction longitudinale, à équidistance de chaque cloison latérale. Pour des raisons d'aérodynamisme, à l'exception de l'échancrure ces cloisons latérales ne s'étendent pas dans des plans parallèles à ce plan de symétrie ; elles sont inclinées, de telle sorte que les extrémités de chaque cloison latérale au voisinage de la cloison supérieure sont plus proches les unes des autres et du plan de symétrie que les extrémités de chaque cloison latérale à distance de cette cloison supérieure. Une telle inclinaison pourrait s'avérer préjudiciable lors de l'assemblage du dispositif de connexion au bras d'essuie-glace, qui ne serait pas uniformément au contact de la cloison latérale portant l'orifice traversant. Pour remédier à ce désagrément, l'orifice traversant présente un pourtour qui forme une surface d'appui plane pour le bras d'essuie-glace. Le plan dans lequel s'inscrit la surface d'appui est ainsi parallèle au plan de symétrie, et par la même occasion au plan dans lequel s'étend la paroi de fond du dégagement de matière.

Selon une caractéristique optionnelle de l'invention, la cloison supérieure comporte une rainure longitudinale, le dégagement de matière formant une zone de réception d'un premier type de bras d'essuie-glace et la rainure longitudinale formant des moyens de réception d'un deuxième type de bras d'essuie-glace.

On comprend que ces moyens, à savoir la rainure longitudinale et le dégagement de matière, coopérant avec tel ou tel type de bras d'essuie-glace, sont distincts l'un de l'autre et sont configurés pour que l'un puisse coopérer avec un type de bras d'essuie-glace sans gêner la coopération ultérieure de l'autre moyen avec un autre type de bras d'essuie-glace.

Selon une caractéristique de l'invention, la rainure longitudinale et le dégagement de matière sont disposés sur des cloisons différentes de l'organe de couverture, de façon à ce que chacun de ces moyens puisse s'adapter aux configurations des bras d'essuie-glace que l'organe de couverture reçoit et à ne pas gêner la fonction de chacun de ces moyens. La rainure longitudinale est ainsi disposée sur la cloison supérieure, tandis que l'échancrure est portée par une cloison latérale. Alternativement, l'organe de couverture peut présenter deux échancrures, qui seront alors disposées chacune sur l'une des cloisons latérales.

Selon une caractéristique optionnelle de l'invention, la rainure longitudinale s'étend d'une extrémité longitudinale à l'autre de l'organe de couverture.

Selon une autre caractéristique de l'invention, les bords délimitant la rainure longitudinale sont des moyens de butée latérale pour le deuxième type de bras d'essuie-glace. Le deuxième type de bras d'essuie-glace est destiné à s'insérer dans la rainure longitudinale, les bords la délimitant formant des moyens de butée qui empêchent la translation de ce deuxième type de bras d'essuie-glace au sein de l'organe de couverture.

Selon une autre caractéristique de l'invention, la rainure longitudinale est ouverte sur un logement interne formé par la cloison supérieure et les cloisons latérales.

Selon une autre caractéristique de l'invention, la plateforme rotative ou l'adaptateur amovible participent à former la cloison de fond de la rainure longitudinale.

Ainsi, lorsque le dispositif de connexion est assemblé, la rainure longitudinale est constituée d'une part par les bords de la cloison supérieure de l'organe de couverture, qui forment les pans latéraux de la rainure longitudinale, et d'autre part par une paroi supérieure de la plateforme rotative ou de l'adaptateur amovible, l'un et/ou l'autre de ces deux éléments formant la cloison de fond de la rainure longitudinale.

Selon une autre caractéristique de l'invention, au moins un barreau transversal relie les cloisons latérales de l'organe de couverture et participe à former la cloison de fond de la rainure longitudinale. Ce barreau transversal a une fonction de rigidification, et permet un meilleur maintien relatif des cloisons latérales, notamment sous effort transversal lorsque le balai est entraîné en mouvement par le bras d'essuie-glace.

Selon une autre caractéristique de l'invention, le barreau transversal est reçu par une zone de dégagement formée au moins en partie par la plateforme rotative ou par l'adaptateur amovible. Une telle configuration permet à la cloison de fond de la rainure longitudinale de présenter une surface plane, le barreau transversal n'étant pas en saillie par rapport à la plateforme rotative.

Selon une autre caractéristique de l'invention, les éléments de fixation sont formés au moins par une forme arrondie disposée à l'une des extrémités longitudinales de l'organe de couverture et configurée pour former un palier de pivotement de l'organe de couverture, et par au moins un épaulement formant un moyen d'arrêt du pivotement de l'organe de couverture.

Selon une autre caractéristique, la forme arrondie est configurée pour assurer le pré-positionnement de l'organe de couverture par rapport à la plateforme rotative. Ainsi, lors de l'assemblage du dispositif de connexion selon l'invention, la forme arrondie permet de pré-positionner des moyens solidaires de la plateforme rotative et d'assurer un palier de pivotement de l'organe de couverture permettant en fin de pivotement de faire coopérer l'épaulement de cet organe de couverture avec des moyens de butée correspondant et de figer la position de recouvrement de l'organe de couverture.

Selon une autre caractéristique de l'invention, la forme arrondie est apte à recevoir des doigts disposés à une extrémité libre de languettes déformables élastiquement et solidaires de la plateforme rotative. Ces doigts viennent se loger au sein de la forme arrondie, de façon à bloquer la translation de la plateforme rotative au sein d'un logement interne de l'organe de couverture. On comprend que dans le cas où l'adaptateur amovible précédemment évoqué est fixé sur la plateforme, les languettes sont alors solidaires de l'adaptateur.

Tel qu'évoqué, les épaulements sont configurés pour assurer, en combinaison avec la forme arrondie, le maintien en position de l'organe de couverture par rapport au module de connexion. La forme arrondie, en coopérant avec les languettes, et les épaulements, en coopérant avec les plots, empêchent la translation du module de connexion par rapport à l'organe de couverture.

Selon une autre caractéristique de l'invention, les épaulements sont portés par une face interne de la cloison supérieure, un élément solidaire de la plateforme rotative, le cas échéant porté par l'adaptateur amovible, étant en contact de ces épaulements lorsque l'organe de couverture est en position de recouvrement du module de connexion.

Selon une autre caractéristique de l'invention, l'au moins un épaulement est réalisé dans un bord de l'organe de couverture participant à délimiter la rainure longitudinale. On comprend que la rainure constitue une ouverture au sein de l'organe de couverture, et plus spécifiquement au sein de la cloison supérieure de cet organe de couverture, et les épaulements sont réalisés dans des portions de la cloison supérieure de l'organe de couverture qui bordent la rainure longitudinale.

L'invention concerne en outre un procédé d'assemblage d'un dispositif de connexion tel que décrit précédemment, comportant une étape de mise en positionnement du module de connexion et de l'adaptateur amovible au sein du logement interne de l'organe de couverture, cette étape de mise en positionnement comprenant un mouvement de pivotement autour d'un axe défini par le contact des doigts disposés à une extrémité libre de languettes déformables élastiquement contre la forme arrondie de l'une des extrémités longitudinales de l'organe de couverture, jusqu'à ce que les épaulements de l'organe de couverture soient en regard de plots disposés sur l'adaptateur amovible.

On comprend que lors de l'assemblage du dispositif de connexion, l'ensemble formé par le module de connexion et l'adaptateur amovible est inséré au sein du logement interne de l'organe de couverture, en faisant coopérer les doigts disposés à l'extrémité libre des languettes dans la forme arrondie de l'organe de couverture, et l'ensemble formé par le module de connexion et l'adaptateur amovible pivote au sein du logement interne jusqu'à ce que ce pivotement soit arrêté par la butée des plots de l'adaptateur amovible sur les épaulements de l'organe de couverture. Lors du pivotement de l'ensemble formé par le module de connexion et l'adaptateur, un effort peut être nécessaire pour faire passer les épaulements de l'organe de couverture en regard des plots et il peut être prévu un bord chanfreiné pour limiter cet effort et s'assurer que les épaulements viennent en regard des plots.

A l'issue de l'étape de mise en positionnement, les languettes de l'adaptateur amovible sont logées dans la forme arrondie de l'une des extrémités longitudinales de l'organe de couverture, et les plots disposés sur une paroi supérieure de cet adaptateur amovible sont au contact des épaulements de la cloison supérieure de l'organe de couverture.

L'invention concerne par ailleurs un balai d'essuyage comprenant un dispositif de connexion tel que décrit précédemment.

Le balai d'essuyage est alors relié au module de connexion par l'intermédiaire du connecteur, ce module de connexion et éventuellement l'adaptateur amovible étant eux-mêmes recouverts par l'organe de couverture.

L'invention porte également sur un système d'essuyage comprenant un bras d'essuie-glace porteur d'un balai d'essuyage tel que décrit précédemment, le balai d'essuyage étant relié au bras d'essuie-glace par l'intermédiaire du dispositif de connexion.

Ce bras d'essuie-glace peut être alternativement un premier type de bras d'essuie-glace ou un deuxième type de bras d'essuie-glace. Il coopère avec l'organe de couverture en s'insérant dans celui-ci.

D'autres caractéristiques, détails et avantages de l'invention ressortiront plus clairement à la lecture de la description qui suit d'une part, et d'exemples de réalisation donnés à titre indicatif et non limitatif en référence aux dessins annexés d'autre part, sur lesquels :
[Fig. 1] est une représentation en perspective d'un balai d'essuyage sur lequel est monté un dispositif de connexion selon l'invention ;
[Fig. 2] est une vue éclatée du balai d'essuyage et du dispositif de connexion représentés sur la figure 1, rendant notamment visible un organe de couverture apte à recouvrir un module de connexion du dispositif de connexion ;
[Fig. 3] est une vue en perspective d'un connecteur, d'un module de connexion comportant une base et une plateforme rotative, et d'un capot, formant le dispositif de connexion représenté sur la figure 1 ;
[Fig. 4] est une vue en perspective du module de connexion et du capot représentés sur la figure 3, dans laquelle la plateforme rotative est dans une position de montage ;

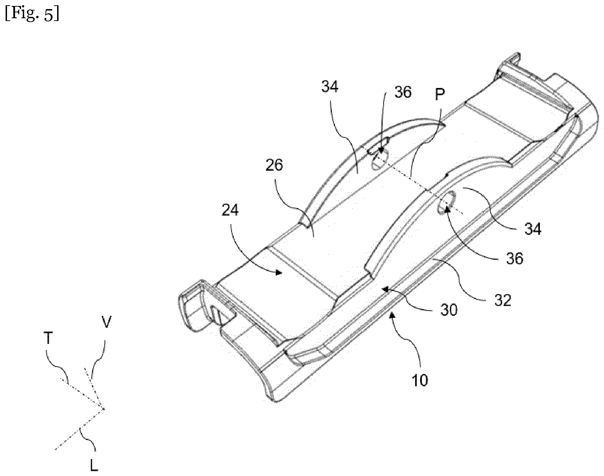

[Fig. 5] est une représentation en perspective du connecteur représenté sur la figure 3 ;
[Fig. 6] est une représentation en perspective de la plateforme rotative de la figure 3 associée à un adaptateur amovible ;
[Fig. 7] illustre, schématiquement, l'organe de couverture selon une vue en perspective ;
[Fig. 8] est une vue de coupe de l'organe de couverture de la figure 7, coopérant ici avec l'adaptateur amovible de la figure 6 et un capot du dispositif de connexion ;
[Fig. 9] illustre, en perspective, le dispositif de connexion de la figure 1, et notamment l'organe de couverture, associé à un certain type de bras d'essuie-glace selon un premier mode de réalisation ;
[Fig. 10] est une vue en coupe du dispositif de connexion, de l'organe de couverture et du bras d'essuie-glace selon le premier mode de réalisation de la figure 9 ;
[Fig. 11] illustre, en perspective, le dispositif de connexion de la figure 1 associé à un certain type de bras d'essuie-glace selon un deuxième mode de réalisation ;
[Fig. 12] est une vue en coupe du dispositif de connexion, de l'organe de couverture et du bras d'essuie-glace selon le deuxième mode de réalisation de la figure 11 ;
[Fig. 13] est une vue de dessus de l'ensemble formé par le dispositif de connexion, et notamment de l'organe de couverture, cet ensemble étant associé à un autre type de bras d'essuie-glace ;
[Fig. 14] est une vue de dessous de l'ensemble de la figure 13 ;
[Fig. 15] est une vue en perspective de l'ensemble de la figure 13.

Les caractéristiques, variantes et les différentes formes de réalisation de l'invention peuvent être associées les unes avec les autres, selon diverses combinaisons, dans la mesure où elles ne sont pas incompatibles ou exclusives les unes par rapport aux autres. On pourra notamment imaginer des variantes de l'invention ne comprenant qu'une sélection de caractéristiques décrites par la suite de manière isolée des autres caractéristiques décrites, si cette sélection de caractéristiques est suffisante pour conférer un avantage technique et/ou pour différencier l'invention par rapport à l'état de la technique antérieur.

Sur les figures, les éléments communs à plusieurs figures conservent la même référence.

Dans la description détaillée qui va suivre, les dénominations « longitudinale », « transversale » et « verticale » se réfèrent à l'orientation d'un système d'essuyage selon l'invention. Une direction longitudinale correspond à une direction principale d'allongement d'un balai d'essuyage de ce système d'essuyage, cette direction longitudinale étant parallèle à un axe longitudinal L d'un repère L, V, T illustré sur les figures. Une direction verticale correspond à une direction d'empilement d'un connecteur, d'un module de connexion et d'un organe de couverture du système d'essuyage, cette direction verticale étant parallèle à un axe vertical V du repère L, V, T et cet axe vertical V étant perpendiculaire à l'axe longitudinal L. Enfin, une direction transversale correspond à une direction parallèle à un axe transversal T du repère L, V, T, cet axe transversal T étant perpendiculaire à l'axe longitudinal L et l'axe vertical V.

En outre, les dénominations « inférieure » et « supérieure » concernant les éléments du système d'essuyage s'entendent relativement à l'éloignement de ces éléments du balai d'essuyage, une extrémité inférieure de tels éléments correspondant à l'extrémité disposée au voisinage de ce balai d'essuyage tandis qu'une extrémité supérieure correspond à l'extrémité disposée à distance du balai d'essuyage.

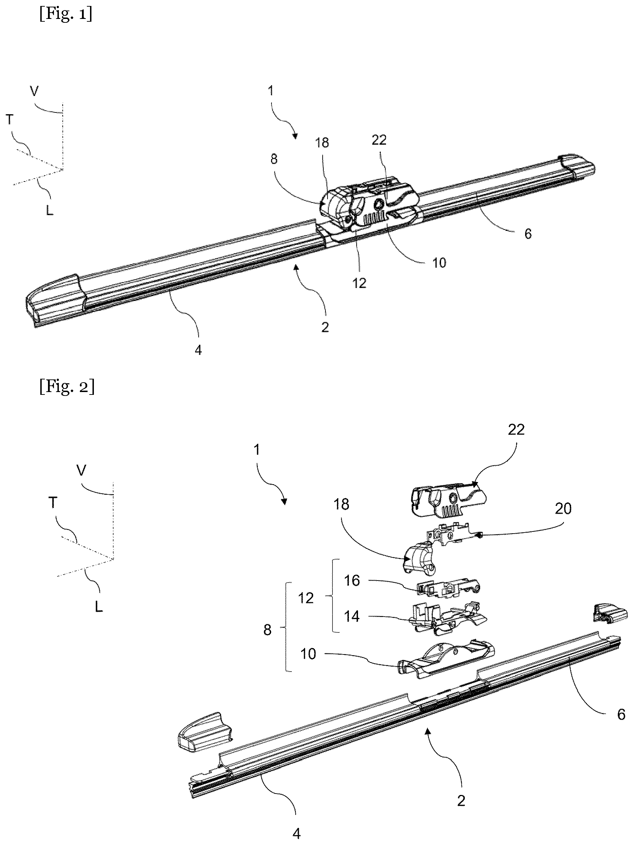

La figure 1 illustre un système d'essuyage 1 configuré pour assurer le nettoyage d'une surface vitrée d'un véhicule, par exemple un pare-brise, de manière à améliorer la visibilité qu'a un conducteur de la route située devant le véhicule. Le système d'essuyage 1 comprend au moins un bras d'essuie-glace, non représenté sur la figure 1, portant à une extrémité un balai d'essuyage 2 qui s'étend principalement le long de la direction longitudinale L.

Le balai d'essuyage 2 comprend au moins une lame d'essuyage 4, destinée à être au contact de la surface vitrée à nettoyer, et un support 6 de ladite lame d'essuyage 4.

Le balai d'essuyage 2 est par ailleurs rendu solidaire du bras d'essuie-glace par un dispositif de connexion 8. Le dispositif de connexion 8 selon l'invention comporte un connecteur 10 et un module de connexion 12 monté en pivotement sur le connecteur 10, ce dernier étant solidaire du balai d'essuyage 2 tandis que le module de connexion 12 est configuré pour être rendu solidaire du bras d'essuie-glace du système d'essuyage 1.

Le montage pivotant du module de connexion 12 sur le connecteur 10 permet ainsi au balai d'essuyage 2 d'être en pivotement à l'une des extrémités du bras d'essuie-glace, et d'assurer ainsi le plaquage de la lame d'essuyage 4 sur la surface vitrée à essuyer.

Plus particulièrement et tel que visible sur les figures 2 à 4, le module de connexion 12 comprend une base 14, montée pivotante autour d'un axe de pivotement P sur le connecteur 10, et une plateforme rotative 16 montée en rotation autour d'un axe de rotation R sur la base 14.

Il convient de noter que selon l'invention, et tel que cela va être décrit en détails ci-après, le dispositif de connexion est particulier en ce qu'il comprend un organe de couverture configuré pour recouvrir le module de connexion et pour intégrer des moyens de fixation d'au moins un bras d'essuie-glace, afin d'augmenter l'adaptabilité du dispositif de connexion à un grand nombre de bras d'essuie-glace. Une telle configuration peut être mise en oeuvre indépendamment de la présence d'une plateforme rotative montée pivotante sur la base. Dans la description qui va suivre, des détails vont être donnés sur la structure de la plateforme rotative sans que cela soit limitatif pour l'invention.

Dans l'exemple illustré, le dispositif de connexion 8 comprend trois organes, à savoir le connecteur 10, la base 14 et la plateforme rotative 16, articulés deux à deux pour d'une part permettre un pivotement du connecteur 10, et par extension du balai d'essuyage 2, par rapport au module de connexion 12 et d'autre part un montage de différents types de bras d'essuie-glace sur le module de connexion 12.

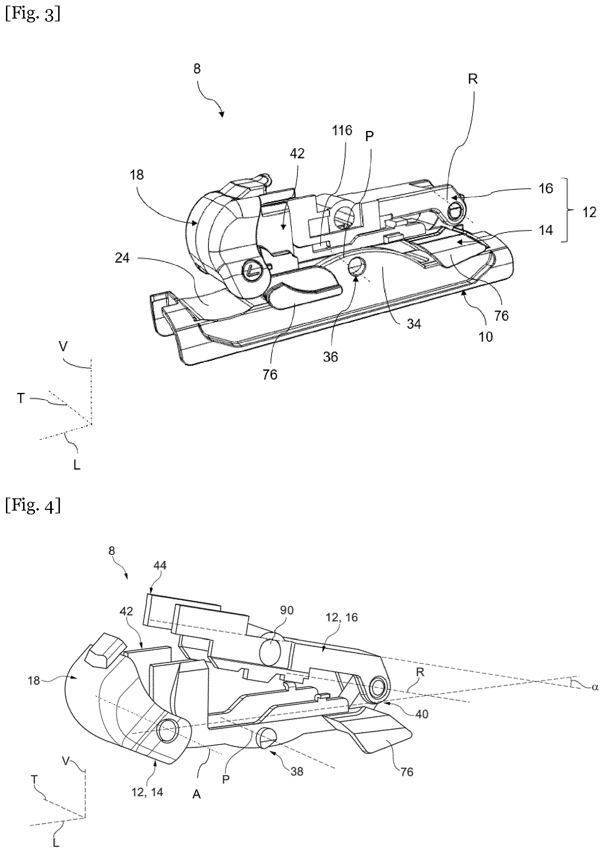

Tel que plus particulièrement visible sur la figure 3, l'axe de pivotement P et l'axe de rotation R peuvent s'étendre parallèlement et distinctement l'un par rapport à l'autre. Dans l'exemple illustré, l'axe de pivotement P est formé sensiblement au centre de la base 14, relativement à la dimension longitudinale de cette base, et l'axe de rotation R est formé à l'une des extrémités longitudinales de la base 14. Le décalage longitudinal de l'axe de rotation par rapport à l'axe de pivotement P et de l'axe de rotation R permet de basculer la plateforme rotative dans une position de montage inclinée par rapport au plan longitudinal et transversal de la base, le basculement de cette plateforme rotative permettant le montage de certains types de bras d'essuie-glace sur ce dispositif de connexion 8.

L'axe de pivotement P et l'axe de rotation R peuvent être décalés verticalement l'un par rapport à l'autre.

Tel que cela est particulièrement visible sur les figures 2 et 4, le dispositif de connexion 8 comprend un capot 18 monté mobile en pivot autour d'un axe de pivot A parallèle à l'axe de pivotement P et à l'axe de rotation R. L'axe de pivot A est formé à une extrémité longitudinale de la base 14 qui est opposée à l'extrémité longitudinale où est formé l'axe de rotation R. Le capot 18 est configuré pour être mobile entre une position de recouvrement, fixant certains types de bras d'essuie-glace sur le dispositif de connexion 8, et une position de dégagement, autorisant le montage de certains types de bras d'essuie-glace sur le dispositif de connexion 8.

Par ailleurs, le dispositif de connexion 8 peut comprendre, tel que cela est visible sur la figure 2, un adaptateur amovible 20 configuré pour être fixé sur la plateforme rotative 16 et permettre la coopération entre le dispositif de connexion 8 et certains types de bras d'essuie-glace qui ne peuvent être fixés directement sur la plateforme rotative.

À cet effet, cet adaptateur amovible 20 comprend des moyens de fixation par encliquetage aptes à coopérer avec la plateforme rotative, et il comprend en outre des moyens de fixation de certains types de bras d'essuie-glace, parmi lesquels des plots délimitant une tranchée permettant le positionnement d'une patte de maintien 262 d'un type de bras d'essuie-glace, et/ou au moins une languette de verrouillage.

Tel qu'évoqué précédemment, le dispositif de connexion 8 comporte un organe de couverture 22 rendu ici solidaire de la plateforme rotative 16 et/ou de la base 14 et recouvrant au moins partiellement le connecteur 10, la plateforme rotative 16 et/ou la base 14 et le cas échéant l'adaptateur amovible 20. L'organe de couverture 22, qui sera décrit plus en détail par la suite, autorise la coopération entre le dispositif de connexion 8 et certains types de bras d'essuie-glace.

Le connecteur 10 présente une paroi principale 24 s'étendant sensiblement parallèlement aux directions longitudinale L et transversale T, la paroi principale 24 présentant une face supérieure 26 en regard du module de connexion 12 et une face inférieure en regard du balai d'essuyage 2. Plus particulièrement, la face inférieure de la paroi principale 24 participe à délimiter un logement du balai et notamment du support 6 de la lame d'essuyage 4.

Le connecteur 10 comprend deux parois latérales 30 s'étendant à chacune des extrémités transversales de la paroi principale 24, chacune des parois latérales 30 s'inscrivant dans un plan sensiblement parallèle aux directions longitudinale L et verticale V. Les parois latérales 30 présentent chacune un dégagement 32 sur leur face externe, chaque dégagement 32 étant formé par un retrait de matière depuis le bord supérieur de la paroi latérale correspondante et s'étendant longitudinalement entre les deux extrémités longitudinales du connecteur 10.

Le connecteur 10 comprend deux pans 34 s'étendant parallèlement l'un par rapport à l'autre et faisant saillie depuis la face supérieure 26 de la paroi supérieure, chaque pan 34 prolongeant une paroi latérale 30 du connecteur 10. Ces deux pans 34, qui s'étendent à l'opposé de la face inférieure de la paroi principale 24, participent à délimiter au moins en partie un logement de la base 14. Les pans 34 présentent chacun une extrémité libre courbée convexe, et sont les symétriques l'un de l'autre par rapport à un plan médian du connecteur 10 parallèle aux directions longitudinale L et verticale V.

Au moins l'un des deux pans 34 comprend un élément de pivotement 36 apte à coopérer avec un organe de pivotement 38 de la base 14 de sorte à former un dispositif de pivotement entre le connecteur 10 et la base 14. Préférentiellement, chacun des deux pans 34 comprend un élément de pivotement 36 coopérant avec un organe de pivotement 38 correspondant de la base 14, les orifices des éléments de pivotement 36 étant alignés selon la direction transversale T.

L'élément de pivotement 36 prend ici la forme d'un orifice formé dans le pan 34, ici un orifice traversant transversalement le pan 34, tandis que l'organe de pivotement 38 prend la forme d'un toron destiné à s'étendre au moins partiellement dans l'orifice. La coopération de l'orifice et du toron forme ainsi le dispositif de pivotement.

L'élément de pivotement 36 est ici disposé au centre du pan 34 selon la direction longitudinale L, c'est-à-dire qu'il est disposé à équidistance de chacune des extrémités longitudinales du pan 34 selon la direction longitudinale L. La disposition centrée de l'élément de pivotement 36 permet notamment d'équilibrer le pivotement du balai d'essuyage 2 par rapport à sa disposition à l'extrémité du bras d'essuie-glace.

On va maintenant décrire en détail le module de connexion 12, en décrivant notamment la base 14 et la plateforme rotative 16.

La base 14 comprend un organe de rotation 40 apte à coopérer avec la plateforme rotative 16, pour permettre à la plateforme de tourner par rapport à la base autour de l'axe de rotation R, et un bloc de guidage 42 destiné à recevoir une extrémité libre 44 de la plateforme rotative 16. La base 14 s'étend longitudinalement en présentant une première extrémité longitudinale au voisinage de laquelle le bloc de guidage 42 est disposé et une deuxième extrémité longitudinale au voisinage de laquelle l'organe de rotation 40 est disposé. Le bloc de guidage 42 est destiné à recevoir, en plus de l'extrémité libre 44 de la plateforme rotative 16, un type de bras d'essuie-glace particulier et participe ainsi à le rendre solidaire du module de connexion 12. L'organe de rotation 40 quant à lui autorise la rotation de la plateforme rotative 16 entre une première position où l'extrémité libre 44 de la plateforme rotative 16 est disposée dans le bloc de guidage 42 et une deuxième position où l'extrémité libre 44 de la plateforme rotative 16 est disposée à distance du bloc de guidage 42.

Autrement dit, on peut définir que la plateforme rotative 16 est mobile entre une première position de travail illustrée sur la figure 3 dans laquelle la plateforme rotative 16 est reçue dans le bloc de guidage 42 de la base 14 et une deuxième position de montage illustrée sur la figure 4 dans laquelle l'extrémité libre 44 de la plateforme rotative 16 est disposée à distance du bloc de guidage 42.

Ces deux positions de la plateforme rotative peuvent notamment être définies dans un plan perpendiculaire à l'axe de rotation R, c'est-à-dire un plan parallèle aux directions longitudinale L et verticale V. Lorsque la plateforme rotative 16 est dans la première position de travail, l'axe d'allongement principal de ladite plateforme rotative 16 est parallèle à l'axe d'allongement principal de la base 14, ici l'axe longitudinal L. Lorsque la plateforme rotative 16 est dans la deuxième position de montage, l'axe d'allongement principal de ladite plateforme rotative 16 et l'axe d'allongement principal de la base 14 sont sécants.

Tel que cela est illustré sur la figure 4, l'axe d'allongement principal de la plateforme rotative 16 forme un angle d'inclinaison a avec l'axe d'allongement principal de la base 14 lorsque la plateforme rotative 16 est dans la deuxième position de montage, l'angle d'inclinaison a présentant une valeur comprise entre 25° et 45° et qui peut plus particulièrement être autour de 30°.

Cette valeur d'inclinaison angulaire présente l'avantage d'écarter suffisamment la plateforme rotative 16 de la base 14 pour permettre le montage de certains types de bras sur le dispositif de connexion 8, notamment des bras présentant une extrémité en forme de crochet, sans toutefois que le bras n'entre en contact avec le balai sur lequel est fixé le dispositif de connexion 8.

On comprend ici que la plateforme rotative 16 est dans la première position de travail lorsqu'un bras d'essuie-glace est monté dans le dispositif de connexion 8, tandis qu'elle est dans la deuxième position de montage lorsqu'il convient de monter ou démonter un bras d'essuie-glace par rapport au balai et au dispositif de connexion 8 associé.

La base 14 comprend un cadre comportant au moins deux parois longitudinales, s'étendant le long de la direction longitudinale L entre la première extrémité longitudinale et la deuxième extrémité longitudinale parallèlement l'une par rapport à l'autre, et deux parois transversales s'étendant perpendiculairement et entre les parois longitudinales, une première paroi transversale étant disposée à la première extrémité longitudinale de la structure et en regard du bloc de guidage 42 tandis que la deuxième paroi transversale est disposée à la deuxième extrémité longitudinale et porte l'organe de rotation 40. En d'autres termes, les parois transversales s'étendent parallèlement à la direction transversale T, de sorte à former avec les parois longitudinales le cadre portant au moins le bloc de guidage 42 et l'organe de rotation 40.

Au moins une paroi longitudinale porte l'organe de pivotement 38 précédemment évoqué et configuré pour coopérer avec l'élément de pivotement 36 du connecteur 10. On comprend que le toron de l'organe de pivotement 38 s'étend vers l'extérieur de la paroi longitudinale qui le porte, c'est-à-dire à l'opposé de l'autre paroi longitudinale, pour coopérer avec l'orifice de l'élément de pivotement 36 porté par le pan 34 correspondant du connecteur 10.

Plus précisément, l'organe de pivotement 38 comprend une languette délimitée longitudinalement par au moins une rainure verticale formée dans la paroi longitudinale, la languette portant le toron s'étendant transversalement vers l'extérieur de la base 14. La languette s'étend principalement le long de la direction verticale V, de sorte qu'un axe de fléchissement de la languette s'étende parallèlement à la direction longitudinale L. Le fléchissement de la languette permet le montage de la base 14 sur le connecteur 10, la languette étant mobile autour de l'axe de fléchissement lors du montage de la base 14 sur le connecteur 10 de sorte à reprendre sa position initiale une fois que le toron s'étend au moins en partie dans l'orifice du pan 34.

Les parois longitudinales sont écartées l'une de l'autre de sorte qu'elles s'étendent entre les pans 34 du connecteur 10 lorsque la base 14 est fixée sur le connecteur par encliquetage, la base 14 s'étendant au moins en partie dans le logement défini par les pans 34 du connecteur 10 tel qu'évoqué précédemment.

De plus, les parois longitudinales présentent chacune une encoche s'étendant longitudinalement sur un bord supérieur de la paroi longitudinale.

Le bloc de guidage 42, disposé à la première extrémité longitudinale de la base, comprend deux pans latéraux s'étendant parallèlement l'un par rapport à l'autre chacun dans le prolongement vertical de l'une des parois longitudinales, à l'opposé du connecteur 10. Les pans latéraux participent notamment à délimiter un logement de l'extrémité libre 44 de la plateforme rotative 16 lorsque celle-ci est dans la première position de travail.

Le bloc de guidage 42 comprend au moins un évidement formé sur une face interne d'un des pans latéraux. Préférentiellement, chacune des faces internes des pans latéraux présente un évidement. Au moins un évidement participe à former une empreinte de réception de l'extrémité libre 44 de la plateforme rotative 16.

Par ailleurs, la base 14 comprend un organe de pivot apte à coopérer avec un élément de pivot du capot 18 de manière former un dispositif de pivot entre base et capot autour de l'axe de pivot A. Le capot 18 est de la sorte mobile entre une position de recouvrement dans laquelle le capot 18 est en contact avec le bloc de guidage 42, en recouvrement au moins en partie du logement de l'extrémité libre 44 de la plateforme rotative 16 et d'une extrémité d'un bras d'essuie-glace fixé sur le dispositif de connexion, et une position de dégagement dans laquelle le capot 18 est à distance du bloc de guidage 42, pour permettre notamment le montage d'un bras d'essuie-glace sur la plateforme rotative dans sa position de montage. Ici, l'élément de pivot du capot est un orifice et l'organe de pivot comporte au moins un arbre faisant une saillie transversale de la base 14 au voisinage de la première extrémité longitudinale.

Un moyen de butée est associé à l'organe de pivot, de manière à former butée au pivot du capot 18 autour de l'axe de pivot A et bloquer le capot 18 dans sa position de dégagement. Le moyen de butée prend par exemple ici la forme d'un pion s'étendant depuis une face externe d'un des pans latéraux le long de la direction transversale T.

Tel que cela est illustré, les pans latéraux peuvent être symétriques l'un de l'autre par rapport à un plan médian de la base 14, perpendiculaire à l'axe de pivotement P.

À la deuxième extrémité longitudinale, la base 14 comprend au moins une excroissance qui fait saillie de la première paroi transversale à l'opposé du connecteur 10, notamment pour porter l'organe de rotation 40 précédemment évoqué et décaler verticalement cet organe de rotation 40 par rapport à l'organe de pivotement 38. L'organe de rotation 40 prend ici la forme d'un arbre porté par l'excroissance et dépassant transversalement de part et d'autre pour former deux portées aptes à coopérer avec un élément de rotation de la plateforme rotative. L'excroissance s'étend plus particulièrement depuis la paroi transversale principalement le long de la direction transversale T, à l'opposé du connecteur 10. Tel que cela a été évoqué, dans cette configuration, l'arbre est décalé au moins verticalement par rapport au cadre de la base 14, permettant ainsi à la plateforme rotative 16 de disposer de suffisamment d'espace pour pouvoir être entraîné en rotation autour de l'axe de rotation R.

La base 14 comprend un moyen de limitation de rotation de la plateforme rotative 16 autour de l'axe de rotation R, le moyen de limitation de rotation étant disposé à l'extrémité libre de l'excroissance. Le moyen de limitation de rotation permet ainsi de bloquer la rotation de la plateforme rotative 16 dans la deuxième position de montage, le moyen de limitation de rotation prenant par exemple la forme d'un doigt de butée.

Par ailleurs, la base 14 peut comprendre des moyens de reprise d'efforts, comportant notamment une aile 76 s'étendant dans un plan parallèle aux plans dans lesquels s'inscrivent respectivement les parois longitudinales, l'aile 76 formant une saillie d'une des parois longitudinales en s'étendant à l'opposé du bord supérieur de cette paroi longitudinale. Préférentiellement, la base 14 comprend une paire d'ailes 76 s'étendant de part et d'autre de la base 14, chacune des ailes 76 s'étendant dans un plan parallèle aux parois longitudinales et à distance de celles-ci en délimitant un logement d'un pan 34 du connecteur 10.

Tel qu'illustré sur la figure 3, la base 14 est configurée pour qu'une paroi longitudinale et l'aile 76 qui forme saillie de cette paroi longitudinale encadrent transversalement un pan 34 du connecteur 10. En d'autres termes, chaque pan 34 est encadré transversalement d'une part par l'une des parois longitudinales et d'autre part par l'une des ailes 76 de la base 14. Par cet encadrement, les moyens de reprise d'efforts permettent de reprendre un effort exercé transversalement sur le connecteur 10.

On va maintenant décrire plus en détail la plateforme rotative 16.

La plateforme rotative 16 comprend un corps s'étendant le long de la direction longitudinale L entre l'extrémité libre 44 configurée pour coopérer avec le bloc de guidage 42 et un bord longitudinal sur lequel est installé un élément de rotation de la plateforme rotative 16 autour de l'axe de rotation R.

Le corps prend globalement la forme d'une paroi s'étendant principalement dans un plan parallèle aux directions longitudinale L et transversale T. Le corps présente une surface supérieure destinée à être en regard du bras d'essuie-glace destiné à être fixé sur le dispositif de connexion, une surface inférieure destinée à être en regard de la base 14 et deux flancs latéraux.

Comme visible en figure 4, la plateforme rotative 16 comprend un alésage 90 destiné à former un palier de réception d'une tige d'un bras d'essuie-glace, l'alésage s'étendant transversalement dans le corps et étant ouvert sur au moins un des flancs latéraux. On comprend ici que le bras d'essuie-glace est monté transversalement sur le dispositif de connexion 8, le bras se logeant dans l'alésage 90 formant palier de réception, ce qui participe à rendre solidaire le dispositif de connexion 8 du bras d'essuie-glace.

L'élément de rotation précédemment évoqué est notamment configuré pour coopérer avec l'organe de rotation 40 de la base 14, de sorte à pouvoir rendre mobile en rotation la plateforme rotative 16 entre la première position de travail et la deuxième position de montage tel que précédemment évoqué. L'élément de rotation comprend ici deux pattes de rotation comprenant chacune un orifice traversant transversalement la patte de rotation et configuré pour coopérer avec l'une des portées de l'organe de rotation de la base 14. On comprend par patte de rotation une forme se distinguant des flancs latéraux par d'une part un prolongement vertical vers la base 14 et d'autre part un prolongement longitudinal de ces flancs latéraux à l'opposé de l'extrémité libre 44 de la plateforme rotative 16.

Par ailleurs, la plateforme rotative 16 est configurée pour coopérer avec l'adaptateur amovible 20, de sorte à fixer l'adaptateur amovible 20 sur la plateforme rotative 16. Par exemple, la plateforme rotative 16 comprend une fenêtre formée par le décalage vertical entre la paroi de guidage et le corps de la plateforme rotative 16, la fenêtre étant destinée à recevoir un crochet de l'adaptateur 20.

De plus, la plateforme rotative 16 comprend au moins une zone de fixation de l'adaptateur amovible 20 sur le corps de la plateforme rotative 16, la zone de fixation prenant la forme d'un renfoncement agencé sur le flanc latéral du corps. Préférentiellement, la plateforme rotative 16 comprend une paire de zones de fixation disposées de part et d'autre d'un plan médian de la plateforme rotative perpendiculaire à l'axe de rotation R. Ces zones de fixation sont dimensionnées pour recevoir des moyens déformables élastiquement embarqués sur l'adaptateur amovibles.

Dans l'exemple illustré, la plateforme rotative 16 comprend deux zones de fixation de l'adaptateur 20 disposés sur un même flanc latéral du corps, afin d'assurer le maintien de l'adaptateur amovible sur la plateforme rotative.

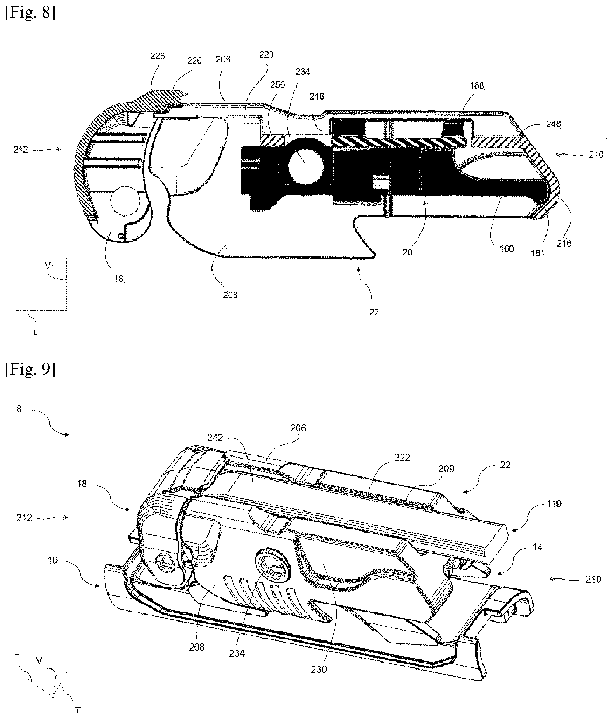

L'extrémité libre 44 de la plateforme rotative 16 comprend un premier flanc prolongeant l'un des flancs latéraux à l'opposé de l'élément de rotation et un deuxième flanc prolongeant l'autre flanc latéral à l'opposé de l'élément de rotation et parallèlement au premier flanc, le premier flanc et le deuxième flanc définissant un logement de réception d'un type de bras d'essuie-glace, notamment un bras d'essuie-glace à crochet tel que le type de bras d'essuie-glace 119 notamment visible sur la figure 9.

À cet effet, au moins l'un des premier et/ou deuxième flancs, comprend une languette élastiquement déformable présentant un doigt 110 s'étendant dans le logement de réception du bras d'essuie-glace, la languette élastiquement déformable étant entourée par une saignée formée dans le flanc correspondant. La forme initiale de la languette et son caractère élastiquement déformable permettent d'une part d'assurer que le bras d'essuie-glace pénètre au sein du logement de réception entre les flancs et d'autre part que chacun des doigts 110 soit en contact du bras d'essuie-glace lorsque celui-ci est en place dans le logement de réception.

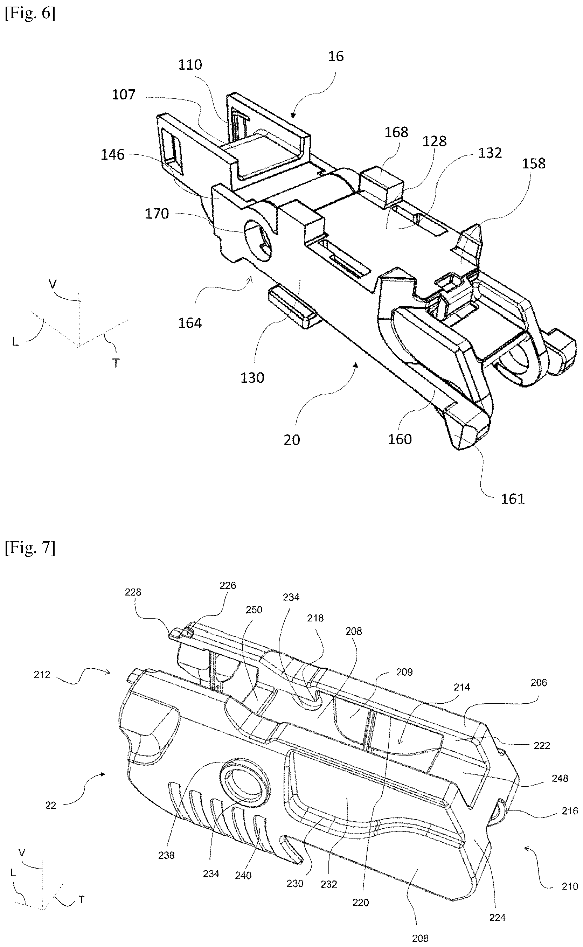

De plus, le premier flanc et le deuxième flanc encadrent une portion d'accueil 107 de la plateforme rotative 16 destinée à accueillir une portion d'un crochet de bras d'essuie-glace 119, la portion d'accueil 107 présentant par exemple un profil courbé comme représenté en figure 6.

Par ailleurs, au moins un des flancs latéraux comprend un organe d'appui formant une saillie de l'arête entre la surface inférieure et ce flanc latéral, de manière à former un bord d'appui tourné vers la base 14, ce bord d'appui étant destiné à venir en appui sur le bord supérieur de la paroi longitudinale de la base 14, au niveau de l'encoche, lorsque la plateforme rotative 16 est dans la première position de travail.

Tel que cela est illustré sur la figure 3, qui rend visible cette position de travail de la plateforme rotative 16, les formes spécifiques de l'organe d'appui et de l'encoche participent à définir une ouverture participant à bloquer en position un type particulier de bras d'essuie-glace par rapport au module de connexion 12, ce type particulier de bras d'essuie-glace comprenant un élément de fixation apte à être logé dans l'ouverture qui est fermée lorsque la plateforme rotative est rabattue contre la base et permet d'emprisonner l'élément de fixation du bras d'essuie-glace.

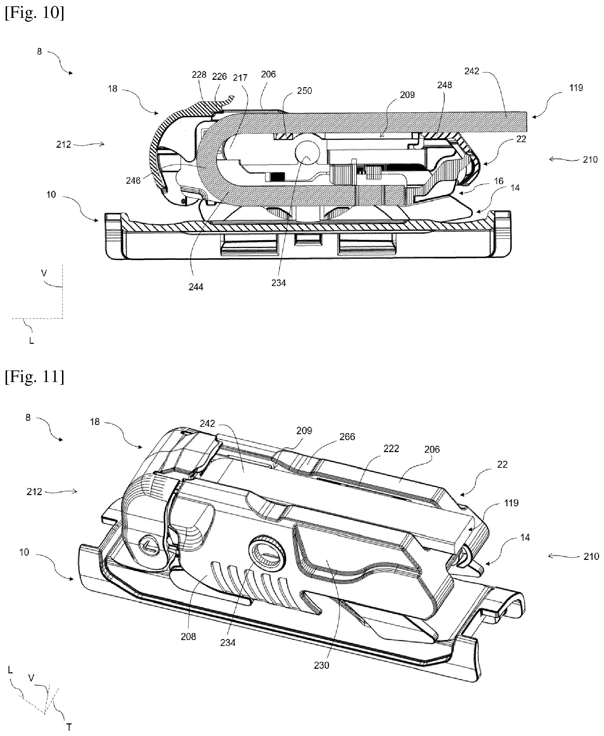

Tel que cela est visible sur la figure 10, la plateforme rotative 16 comprend un élément de renfort 118 s'étendant depuis la surface inférieure du corps vers la base 14, l'élément de renfort 118 pouvant présenter une section en « U » vue dans un plan parallèle à la direction longitudinale L et à l'axe de rotation R. Cet élément de renfort 118 permet d'une part de guider la rotation de la plateforme rotative 16 autour de l'axe de rotation R lorsque la plateforme rotative 16 passe notamment de la deuxième position de montage à la première position de travail, en venant s'insérer entre les parois longitudinales de la base. Cet élément de renfort 118 permet d'autre part de former un moyen de butée pour un type de bras d'essuie-glace, et notamment des bras à crochet tels que le type de bras d'essuie-glace 119 visible sur la figure 9 notamment, qui ont été positionnés autour de la portion d'accueil 107 précédemment évoquée, l'élément de renfort 118 pouvant former une butée longitudinale pour de tels bras à crochet d'une première dimension ou une butée verticale pour un bras à crochet d'une deuxième dimension, tel que visible sur la figure 10.

On comprend de ce qui précède que le connecteur 10, la base 14 et la plateforme rotative 16 coopèrent les uns avec les autres de sorte que le dispositif de connexion 8 puisse prendre une position de montage, durant laquelle la plateforme rotative 16 est dans la deuxième position de montage, et une position de travail durant laquelle la plateforme rotative 16 est dans la première position de travail.

L'adaptateur 20 particulièrement visible en figure 6 comprend un corps principal 128 qui comprend au moins deux parois latérales 130 opposées l'une de l'autre suivant la direction transversale T du système d'essuyage, et au moins une paroi supérieure 132 qui s'étend dans un plan longitudinal L et transversal T de telle sorte qu'elle relie les parois latérales 130 l'une à l'autre pour délimiter un espace de réception 164 de la plateforme rotative 16. La fixation de l'adaptateur 20 sur la plateforme rotative est amovible en ce sens que ledit adaptateur est apte à être retiré de la plateforme rotative et/ou repositionné sur cette dernière.

L'adaptateur 20 comporte au moins une languette de verrouillage 160 élastiquement déformable qui s'étend depuis l'une des parois latérales 130 de l'adaptateur 20 à la deuxième extrémité longitudinale 158 du corps. On entend par élastiquement déformable le fait que ladite languette de verrouillage 160 est apte à se déformer puis à revenir dans son état initial non déformé sans rupture de sa matière ou déformation irréversible. L'au moins une languette de verrouillage 160 comprend alors au moins un doigt 161 formé à une extrémité libre de ladite languette de verrouillage, et à l'opposé de l'espace de réception de la plateforme. Par ailleurs, au moins un chanfrein est formé sur au moins une des languettes de verrouillage 160 de telle sorte qu'il soit tourné à l'opposé du corps principal de l'adaptateur amovible 20. Selon l'exemple de l'invention, une languette de verrouillage 160 telle que décrite ci-dessus s'étend depuis chacune des parois latérales de l'adaptateur 20.

L'adaptateur 20 comprend également au moins un plot 168 qui fait saillie depuis sa paroi supérieure 132, à l'opposé de l'espace de réception 164. De manière plus précise et en accord avec l'exemple de l'invention illustré, la paroi supérieure 132 présente une forme sensiblement rectangulaire avec un plot 168 qui s'étend à chacun de ses quatre coins.

L'adaptateur 20 comprend par ailleurs au moins un trou 170 traversant, formé dans au moins une de ses parois latérales 130 et de telle sorte qu'il soit disposé en regard de l'alésage 90 de la plateforme 16 rotative, destiné à former le palier de réception 90 de la tige d'un type de bras d'essuie-glace. Selon l'exemple de l'invention, chacune des parois latérales 130 de l'adaptateur 20 comprend le trou 170 formé en regard de chacun d'un des alésages 90 de la plateforme 16.

Tel que cela sera évoqué plus en détails ci-après, le trou 170, le ou les plots 168 et la ou les languettes de verrouillage 160 participent à former des moyens de connexion de l'organe de couverture 22 précédemment évoqué.

Cet organe de couverture 22 va maintenant être décrit plus en détail relativement aux figures 7 à 14. Les figures 7 et 8 sont respectivement une vue en perspective et une vue de coupe de cet organe de couverture 22, qui est représenté isolément en figure 7, et associé à l'adaptateur amovible 20 et au capot 18 en figure 8.

Cet organe de couverture 22 s'étend principalement selon la direction longitudinale L. Il présente une section sensiblement en forme de U qui est composée d'une cloison supérieure 206 et de deux cloisons latérales 208, ces deux cloisons latérales 208 étant jointes à une extrémité supérieure de l'organe de couverture 22 par la cloison supérieure 206. Cette cloison supérieure 206 est traversée par une rainure longitudinale 209, qui s'étend longitudinalement depuis une première extrémité longitudinale 210 jusqu'à une deuxième extrémité longitudinale 212.

L'organe de couverture 22 ne comprend pas de cloison inférieure opposée à la cloison supérieure 206, de sorte qu'il est apte à recouvrir d'autres éléments du dispositif de connexion 8. À cet effet, il comporte un logement interne 214, délimité transversalement par les cloisons latérales 208 et verticalement par la cloison supérieure 206. Du fait de la rainure longitudinale 209, qui est une ouverture dans la cloison supérieure 206, ce logement interne 214 communique avec un espace externe à l'organe de couverture 22 à l'opposé du logement interne 214 défini par la section en U de l'organe de couverture 22. Lorsque le dispositif de connexion 8 est assemblé afin de relier un balai d'essuyage 2 à un bras d'essuie-glace, le module de connexion 12 et éventuellement l'adaptateur amovible 20 viennent se loger au sein de ce logement interne 214.

Afin de sécuriser le dispositif de connexion 8 et notamment d'empêcher une translation de l'organe de couverture 22 par rapport aux autres éléments composant ce dispositif de connexion 8, l'organe de couverture 22 est fixé sur des moyens de connexion qui sont solidaires du moyen de connexion 12, ici de la plateforme rotative 16. On comprend que lorsqu'un adaptateur amovible 20 est associé à ce dispositif de connexion 8 et fixé sur la plateforme rotative 16, ces moyens de connexion peuvent être solidaires de cet adaptateur amovible 20. Par ailleurs, et tel que cela a pu être évoqué précédemment, l'invention concerne l'intégration dans l'organe de couverture de moyens de coopération avec des bras d'essuie-glace et l'organe de couverture pourrait sans sortir du contexte de l'invention être fixé sur d'autres éléments structurels du dispositif de connexion, par exemple ici la base 14, notamment dans des cas où le module de connexion ne comporte pas de plateforme rotative ou d'adaptateur amovible.

Dans l'exemple illustré, les moyens de connexion sont par exemple constitués par les quatre plots 168 portés par la paroi supérieure 132 de l'adaptateur amovible 20, ou encore par les languettes de verrouillage 160, tel que cela a été évoqué précédemment en relation avec la figure 6.

L'organe de couverture 22 comprend des éléments de fixation complémentaires de tels moyens de connexion, éléments de fixation et moyens de connexion étant configurés pour coopérer les uns avec les autres.

A titre d'exemple, plus particulièrement visible sur la figure 7, l'organe de couverture 22 présente, à la première extrémité longitudinale 210, une cloison dont une forme arrondie 216 participe à former un palier de pivotement de l'organe de couverture, et il présente sur la cloison supérieure 206 au moins un épaulement 218 qui participe à former des moyens d'arrêt du pivotement de l'organe de couverture pour figer sa position par rapport à la plateforme rotative.

Plus précisément, l'épaulement ou les épaulements 218 sont disposés sur une face interne 220 de la cloison supérieure 206, et chaque épaulement 218 est réalisé dans un bord 222 de la cloison supérieure 206 de l'organe de couverture 22 qui participe à délimiter la rainure longitudinale 209. On comprend que la face interne 220 de la cloison supérieure 206 est celle qui fait face au logement interne 214 de sorte que cette face interne 220 est en regard du module de connexion 12 et éventuellement de l'adaptateur amovible 20 lorsque l'organe de couverture 22 recouvre ces éléments.

Lors de l'assemblage du dispositif de connexion 8, le maintien en position de l'organe de couverture 22 par rapport au module de connexion 12 est assuré, au moins en partie, par les épaulements 218. Ainsi, lorsque l'adaptateur amovible 20 est associé au module de connexion 12, comme visible en figure 8, et que l'organe de connexion est en position de recouvrement du module de connexion, un des plots 168 portés par la paroi supérieure 132 de l'adaptateur amovible 20 est au contact d'un des épaulements 218 disposés sur la face interne 220 de la cloison supérieure 206 de l'organe de couverture 22. Plus précisément, ces plots 168 viennent en butée contre les épaulements 218, de telle sorte qu'une translation longitudinale de l'adaptateur amovible 20 au sein du logement interne 214 de l'organe de couverture 22 est empêchée. Les plots 168 sont également au contact de la face interne 220 de la cloison supérieure 206, faisant obstacle à une translation verticale de l'adaptateur amovible 20 par rapport à l'organe de couverture 22.

La forme arrondie 216 participe elle aussi au maintien en position de l'organe de couverture 22 par rapport au module de connexion 12, en combinaison avec les épaulements 218. Cette forme arrondie 216 est constituée par le recourbement d'une cloison transversale 224, une telle cloison transversale 224 joignant la cloison supérieure 206 et les cloisons latérales 208 à une extrémité longitudinale de l'organe de couverture 22, ici la première extrémité longitudinale 210.

La forme arrondie 216 est apte à recevoir des moyens de connexion de l'adaptateur amovible 20, notamment les languettes de verrouillage 160 et les doigts 161 portés à l'extrémité libre de ces languettes de verrouillage. Dans la position finale, avec l'organe de couverture 22 recouvrant le module de connexion 12, les doigts 161 épousent la face interne de la cloison transversale au niveau de la forme arrondie 216. Les doigts 161 des languettes de verrouillage 160 sont ainsi en butée contre l'organe de couverture 22, bloquant ainsi les translations longitudinale et transversale de l'adaptateur amovible 20 par rapport à l'organe de couverture 22.

Les éléments de fixation embarqués sur l'organe de couverture sont ainsi ici formés par la cloison transversale 224 et sa forme arrondie 216 et par les épaulements 218, qui sont notamment opérationnels du fait de la séquence d'assemblage de l'organe de couverture qui va être décrite ci-après. Plus particulièrement, l'assemblage du dispositif de connexion 8 nécessite une étape de mise en positionnement du module de connexion 12, et ici de l'adaptateur amovible 20 associé, au sein du logement interne 214 de l'organe de couverture 22.

Cette étape de mise en positionnement comprend une insertion initiale des doigts 161, disposés à l'extrémité libre des languettes de verrouillage 160, dans la forme arrondie 216 à l'intérieur du logement interne 214, puis un mouvement de pivotement de l'organe de couverture par rapport au module de connexion et plus particulièrement par rapport à la plateforme rotative, autour d'un axe défini par le contact des doigts 161 contre la forme arrondie 216. Ce mouvement de pivotement se poursuit jusqu'à ce que les épaulements 218 soient en regard des plots 168 disposés sur l'adaptateur amovible 20. On comprend que lorsque l'organe de couverture est en position de recouvrement du module de connexion, tel qu'illustré sur la figure 8 par exemple, une face de butée verticale d'un plot 168 est en regard d'une face de butée verticale d'un épaulement 218 de sorte que le frottement de ces deux faces de butée verticales l'une contre l'autre empêche le pivotement de l'organe de couverture en sens inverse à celui de la mise en positionnement et participe au verrouillage de l'organe de couverture. Et on comprend que pour amener ces faces de butée verticales en regard lors de l'étape de mise en positionnement, il convient de produire un effort suffisant pour que les épaulements et les cloisons qui les portent se déforment élastiquement pour que les épaulements passent au-delà de l'arête supérieure de la face de butée des plots. Le cas échéant, un chanfrein pourrait être formé sur cette arête.

L'organe de couverture 22 présente également des éléments de fixation à la deuxième extrémité longitudinale 212, opposée à la première extrémité longitudinale 210, qui permettent de bloquer en position l'organe de couverture par rapport à d'autres éléments constitutifs du dispositif de connexion 8. Cette deuxième extrémité longitudinale 212 présente notamment des renfoncements 226 et des ergots 228.

Les renfoncements 226 sont des dépressions formées dans la cloison supérieure 206 de l'organe de couverture 22, et plus précisément sur une face opposée à la face interne 220. Ces renfoncements 226 sont ouverts sur la rainure longitudinale 209.

Les ergots 228 sont disposés dans le prolongement longitudinal, et dans un sens opposé à la cloison transversale 224, de la cloison supérieure, de part et d'autre de la rainure longitudinale 209.

Les renfoncements 226 et les ergots 228 forment des moyens aptes à coopérer avec le capot 18, visible en figure 8, qui présente des formes complémentaires à celles des renfoncements et qui est susceptible de recouvrir les ergots lorsque le capot est rabattu contre le module de connexion. Lorsqu'une première portion du capot est plaquée contre les ergots 228, et lorsque des deuxièmes portions du capot sont reçues dans les zones de réception formées par les renfoncements, un contact effectif est formé en au moins une zone entre le capot et l'organe de couverture de sorte que l'organe de couverture 22 est bloqué en position sur le module de connexion 12. On comprend que ce capot 18 permet de verrouiller la position de l'organe de couverture sur la plateforme rotative et sur l'adaptateur le cas échéant.

Selon l'invention, l'organe de couverture 22 est configuré de sorte qu'au moins une cloison latérale 208 comporte une zone de réception d'un type spécifique de bras d'essuie-glace, cette zone de réception étant formée par un dégagement de matière, également appelée dans la suite de la description échancrure, 230, qui est réalisée à partir de la cloison supérieur tel que cela est particulièrement visible sur la figure 7 par exemple. L'organe de couverture 22 peut comprendre une échancrure 230 sur une seule de ses cloisons latérales 208, ou bien une telle échancrure 230 sur chacune de ses cloisons latérales 208. L'échancrure 230 est formée à partir d'un bord supérieur de la cloison latérale 208, disposé au voisinage de la cloison supérieure 206, et s'étend partiellement sur la cloison latérale selon la dimension verticale de l'organe de couverture 22.

Tel qu'illustré sur la figure 7, le dégagement de matière, ou l'échancrure, 230 s'étend également partiellement sur la cloison latérale selon la dimension longitudinale de l'organe de couverture 22. Plus particulièrement, l'échancrure est ouverte sur la première extrémité longitudinale de l'organe de couverture 22, et s'étend à partir de celle-ci environ jusqu'à la moitié de l'organe de couverture 22 selon la dimension longitudinale, jusqu'à un orifice traversant 234 qui va être décrit ci-après.

L'échancrure 230 est notamment formée dans la cloison latérale associée de manière à fournir une surface d'appui verticale à un premier type de bras d'essuie-glace 270, alors que la cloison latérale au sein de laquelle l'échancrure 230 s'étend est inclinée par rapport à un plan vertical.

Plus particulièrement, l'organe de couverture 22 est sensiblement symétrique selon un plan de symétrie longitudinal L et vertical V, à équidistance des cloisons latérales 208, un tel plan de symétrie correspondant au plan médian défini précédemment relativement au connecteur, à la base et à la plateforme rotative lorsque l'organe de couverture est en recouvrement du module de connexion. Au voisinage de leur bord supérieur et donc de la cloison supérieure 206, les cloisons latérales 208 sont plus proches du plan de symétrie qu'elles ne le sont au voisinage de leur bord inférieur disposé à distance de la cloison supérieure 206. On comprend ainsi que les cloisons latérales 208 s'étendent principalement dans des plans qui ne forment pas un angle droit avec le plan dans lequel s'étend principalement la cloison supérieure 206, mais plutôt dans des plans inclinés par rapport à celle-ci, cloison supérieure 206 et cloisons latérales 208 étant jointes selon un angle obtus.

L'échancrure 230, qui correspond à un dégagement de matière au sein de la cloison latérale 206, est configurée de sorte qu'elle présente une paroi de fond 232 qui est perpendiculaire à la cloison supérieure 206 et qui forme donc une surface d'appui verticale telle que précédemment évoquée. À cet effet, le dégagement de matière est de plus en plus marqué au fur et à mesure de l'éloignement de la cloison supérieure 206.

Au moins une cloison latérale 208 porte un orifice traversant 234. L'organe de couverture 22 peut également comporter deux orifices traversants 234, avec un orifice traversant 234 pour chaque cloison latérale 208, comme c'est le cas pour les modes de réalisation représentés sur les figures. Il convient toutefois de noter, dans le cas non représenté où une seule cloison latérale 208 porte un orifice traversant 234 et où une seule échancrure 230 est formée, que la cloison latérale portant l'orifice traversant est la cloison opposée à la cloison latérale sur laquelle est disposée l'échancrure 230.

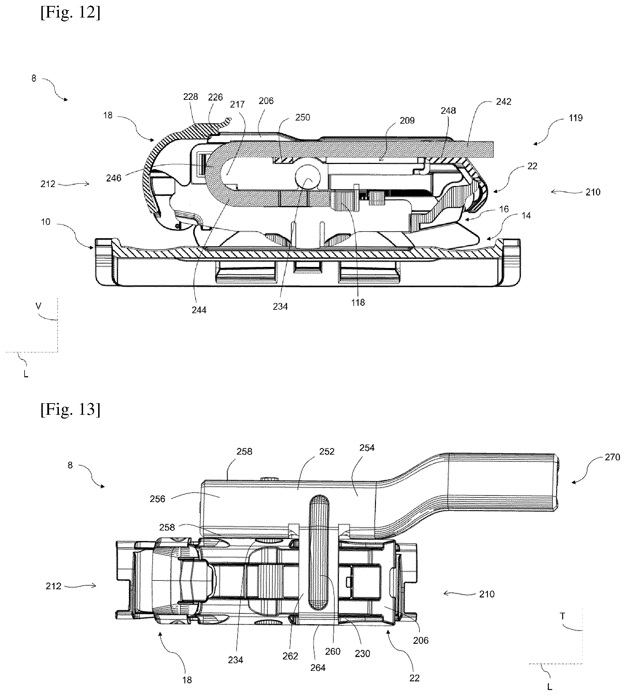

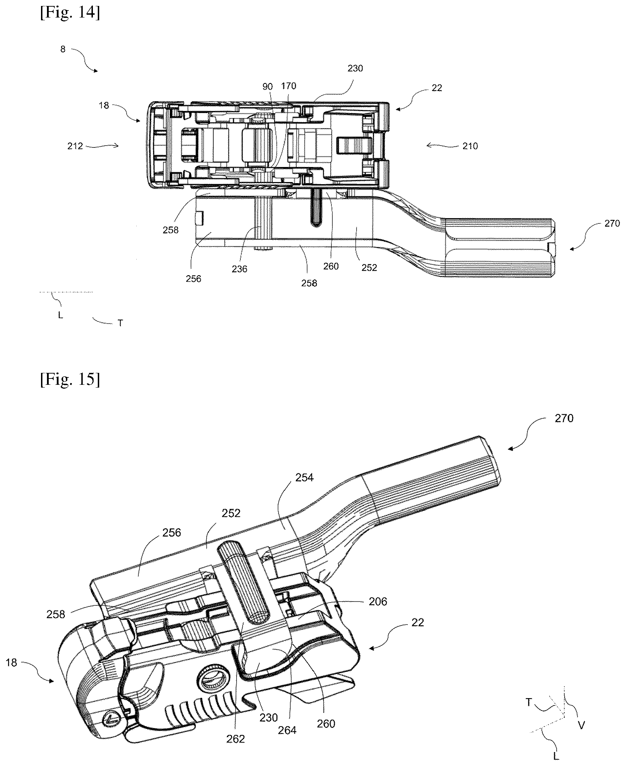

L'orifice traversant 234 est notamment dimensionné pour recevoir une tige 236 du premier type de bras d'essuie-glace ₂₇₀, dans une coopération qui sera plus particulièrement décrite par la suite en relation avec les figures 13 et 14.

L'orifice traversant 234 est en outre bordé par un pourtour 238 configuré pour former une surface d'appui plane pour le premier type de bras d'essuie-glace 270, destiné à compenser l'inclinaison des cloisons latérales 208. Plus particulièrement, le pourtour 238 est configuré de sorte que cette surface d'appui plane s'inscrit dans un plan perpendiculaire à la cloison supérieure 206, et dans un plan parallèle au plan dans lequel s'étend la paroi de fond 232 de l'échancrure 230.

Au voisinage de la première extrémité longitudinale 210 et de la cloison transversale 224, l'organe de couverture 22 présente un premier barreau transversal 248 qui s'étend entre les deux cloisons latérales 208, ce premier barreau transversal 248 participant à délimiter verticalement la rainure longitudinale 209, constituant ainsi une portion d'une cloison de fond de cette rainure longitudinale 209. Cette cloison de fond est également formée par un deuxième barreau transversal 250, disposé entre les deux cloisons latérales 208 au voisinage de l'orifice traversant 234. Lorsque l'organe de couverture 22 recouvre le module de connexion 12 et éventuellement l'adaptateur amovible 20, cette cloison de fond de la rainure longitudinale 209 est également constituée par la plateforme rotative 16 et/ou par l'adaptateur amovible 20. Tel qu'illustré sur la figure 8, où seul l'adaptateur amovible 20 est représenté, sans la plateforme rotative 16, la paroi supérieure 132 de cet adaptateur amovible 20 forme une portion de cette cloison de fond. Afin que la cloison de fond présente une surface plane, le deuxième barreau transversal 250 est reçu dans une zone de dégagement formée dans la paroi supérieure de la plateforme rotative 16, et dans la paroi supérieure 132 de l'adaptateur amovible 20 si ce dernier est associé au module de connexion 12. On comprend ainsi que la rainure longitudinale 209 est délimitée, lorsque l'organe de couverture 22 est assemblé au module de connexion 12, par les bords 222 de la cloison supérieure de l'organe de couverture selon la direction transversale T, et par une cloison de fond le long de la direction longitudinale L formée par la paroi supérieure 132 de l'adaptateur amovible 20, le premier barreau transversal 248 et le deuxième barreau transversal 250 de l'organe de couverture.

Les premier et deuxième barreaux transversaux 248, 250 ont en outre une fonction de rigidification de l'organe de couverture 22 et de tenue sous les efforts latéraux d'essuyage transmis à l'organe de couverture 22.

Les cloisons latérales 208 présentent par ailleurs des zones 240 configurées pour faciliter la préhension, qui sont équipées de stries ici sensiblement verticales. De telles zones 240 pourraient alternativement être employées pour personnaliser l'organe de couverture 22, par exemple en y apposant des éléments permettant de l'identifier.

Selon l'invention, la rainure longitudinale 209 et l'échancrure 230 sont configurées pour permettre au dispositif de connexion 8 de coopérer avec différents types de bras d'essuie-glace différents. Plus spécifiquement, le dégagement de matière, ou l'échancrure, 230 est configuré pour coopérer avec un premier type de bras d'essuie-glace 270, représenté en figures 13 et 14 tandis que la rainure longitudinale 209 est configurée pour coopérer avec un deuxième type de bras d'essuie-glace 119, représenté aux figures 9 et 10 selon un premier mode de réalisation et aux figures 11 et 12 selon un deuxième mode de réalisation, ces deuxièmes type de bras d'essuie-glace 270 étant différents du premier type de bras d'essuie-glace 119. La présence de cette rainure longitudinale 209 et de cette échancrure 230 sur un même organe de couverture 22 participe donc à la standardisation du dispositif de connexion 8, lui permettant de s'adapter à une pluralité de bras d'essuie-glace.

Le deuxième type de bras d'essuie-glace 119, tel que visible aux figures 9 à 12, est en forme de crochet. Il comporte une tige principale 242 et une tige de renvoi 244, ces deux tiges 242, 244 s'étendant principalement selon la direction longitudinale L et étant reliées l'une à l'autre par une portion courbée 246. Le premier mode de réalisation et le deuxième mode de réalisation diffèrent l'un de l'autre en ce que les tiges principales 242 et les tiges de renvoi 244 présentent des dimensions plus importantes dans le premier mode de réalisation que dans le deuxième mode de réalisation, et en ce que ces tiges 242, 244 sont séparées par une distance mesurée selon la direction verticale V plus importante dans le premier mode de réalisation que dans le deuxième mode de réalisation. De telles différences sont particulièrement visibles en comparant les vues de coupe présentées aux figures 10 et 12, la figure 10 illustrant le premier mode de réalisation tandis que la figure 12 représente le deuxième mode de réalisation.

Selon l'invention, la rainure longitudinale 209 est configurée pour recevoir la tige principale 242 du deuxième type de bras d'essuie-glace 119. Ainsi, les bords 222 délimitant cette rainure longitudinale 209 forment des moyens de butée latérale pour le deuxième type de bras d'essuie-glace 119, empêchant sa translation latérale au sein de l'organe de couverture 22. Lors de l'assemblage du système d'essuyage 2, le dispositif de connexion 8 peut donc être placé dans sa position de montage telle que représentée en figure 4. Le deuxième type de bras d'essuie-glace 119 s'insère alors autour de l'ensemble formé par la plateforme rotative 16, l'adaptateur amovible 20 et l'organe de couverture 22, la tige principale 242 glissant le long de la rainure longitudinale 209 tandis que la tige de renvoi 244 est mise en regard à la fois de la surface inférieure de cette plateforme rotative 16 et de la base 14. Le deuxième type de bras d'essuie-glace 119 peut alors glisser le long du dispositif de connexion 8 jusqu'à ce que sa portion courbée 246 vienne en butée contre la portion d'accueil 107, dont le profil courbé est complémentaire de la portion courbée 246 du deuxième type de bras d'essuie-glace 119, notamment dans le deuxième mode de réalisation.

Une fois que le deuxième type de bras d'essuie-glace 119 est en butée contre ces éléments du module de connexion 12, la plateforme rotative 16 est positionnée, par rotation autour de l'axe de rotation R, jusqu'à sa position de travail visible notamment aux figures 10 et 12. De manière alternative, le deuxième type de bras d'essuie-glace 119 peut s'insérer dans le dispositif de connexion 8 de la façon décrite précédemment une fois que la plateforme rotative 16 est en position de travail et que l'organe de couverture 22 recouvre le module de connexion 12, dès lors que le capot 18 est dans sa position de dégagement.

L'ensemble formé par le module de connexion 12, l'organe de couverture 22 et le premier type de bras d'essuie-glace 119 peut alors être sécurisé en position par le capot 18, qui par pivot selon l'axe de pivot A vient recouvrir la portion courbée 246 jusqu'à ce qu'il repose sur les renfoncements 226 et les ergots 228 de cet organe de couverture 22. Plus particulièrement, une première portion du capot vient appuyer sur les ergots 228, qui forment des saillies longitudinales prolongeant la deuxième extrémité longitudinale de l'organe de couverture et des deuxièmes portions du capot viennent reposer dans les renfoncements 226 et appuyer en conséquence sur le capot. La multiplicité de ces zones d'appui entre le capot mobile et l'organe de couverture permet de s'assurer du verrouillage de l'organe de couverture par le capot lorsque celui-ci est rabattu avec un minimum de jeu possible. Il résulte de ce qui précède que pour ce deuxième type de bras d'essuie-glace 119 les moyens de fixation de l'organe de couverture 22 qui sont utilisés pour figer la position du bras sont d'une part la rainure longitudinale 209, qui permet le blocage transversal et le blocage vertical selon un sens, et les renfoncements 226 et les ergots 228 qui permettent le verrouillage de l'organe de couverture 22 par rapport à la base et de finaliser le blocage du bras selon la composante verticale et la composante longitudinale.

Lorsqu'un tel deuxième type de bras d'essuie-glace 119 est utilisé, la ou les échancrures 230 ne sont pas utilisées et ne présentent dans ce contexte qu'une valeur esthétique.

Tel qu'illustré aux figures 13 et 14, la ou les dégagements de matière, ou échancrures, 230 de l'organe de couverture 22 sont configurées pour coopérer avec le premier type de bras d'essuie-glace 270. Ce premier type de bras d'essuie-glace 270 comprend ici une chape 252 rendue solidaire d'une partie terminale 254 de ce premier type de bras d'essuie-glace ₂₇₀, mais il convient de noter que ce qui va être décrit pourrait être directement intégrée dans l'extrémité du bras sans présence de chape.

La partie terminale du bras, ici via la chape 252, se compose notamment d'une paroi longitudinale 256, s'étendant selon la direction longitudinale L du premier type de bras d'essuie-glace 270, cette paroi longitudinale 256 étant bordée de deux flancs latéraux 258 qui lui sont perpendiculaires. L'un de ces deux flancs latéraux 258 porte une tige 236 et un organe de verrouillage 260, qui s'étendent depuis ce flanc latéral 258 et perpendiculairement à celui-ci, à l'opposé de l'autre flanc latéral.

L'empilement des éléments du dispositif de connexion 8 est apte à être traversé par la tige 236 du deuxième type de bras d'essuie-glace ₂₇₀, cette tige 236 s'insérant notamment dans l'orifice traversant 234 de l'organe de couverture 22, puis dans le trou 170 de l'adaptateur amovible 20 et l'alésage 90 de la plateforme rotative 16, tel que cela est visible sur la figure 14.

Tel que cela est cette fois mieux visible sur la figure 15, l'organe de verrouillage 260, qui comprend une patte de maintien 262 et un bord tombé 264, est quant à lui apte à enserrer l'organe de couverture 22, assurant sa solidarisation avec le premier type de bras d'essuie-glace 270. À cet effet, la patte de maintien 262 recouvre en partie la cloison supérieure 206 de l'organe de couverture 22, et le bord tombé 264 qui est perpendiculaire à cette patte de maintien 262 vient au contact de la paroi de fond 232 de l'échancrure 230. Le bord tombé 264 s'étendant dans un plan sensiblement parallèle au plan dans lequel s'étend le flanc latéral 258 porteur de l'organe de verrouillage 260, il est avantageux d'avoir une échancrure 230 dont la paroi de fond est dans un plan incliné par rapport au plan de la cloison latérale de l'organe de couverture 22, afin que le bord tombé 264 de l'organe de verrouillage 260 et la paroi de fond 232 de l'échancrure 230 s'étendent dans des plans parallèles.

L'invention entend couvrir un procédé d'assemblage d'un tel système d'essuyage 1, associant le balai d'essuyage 2 au premier type de bras d'essuie-glace 270. Ce procédé d'assemblage comprend une étape d'insertion au cours de laquelle la tige 236 du premier type de bras d'essuie-glace 270 est insérée au sein de l'orifice traversant 234 de l'organe de couverture 22, du trou 170 de l'adaptateur amovible 20 et de l'alésage 90 de la plateforme rotative 16. L'organe de verrouillage 260 du premier type de bras d'essuie-glace 270 recouvre alors une partie de la cloison supérieure 206. Le procédé d'assemblage se poursuit par une étape de pivotement, au cours de laquelle l'ensemble formé par le module de connexion 12, l'adaptateur amovible 20 et l'organe de couverture 22 est pivoté de 45° jusqu'à ce que la patte de maintien 262 entre en contact avec la cloison supérieure 206 de l'organe de couverture et que le bord tombé 264 de l'organe de verrouillage coopère avec l'échancrure 230.

La présente invention propose ainsi un dispositif de connexion permettant de relier un balai d'essuyage à un grand nombre de types de bras d'essuie-glace différents, dans lequel un organe de couverture, notamment destiné à assurer une fonction esthétique de recouvrement d'un module de connexion, présente des moyens de fixation d'au moins un type de bras d'essuie-glace pour augmenter le nombre de types de bras d'essuie-glace différents avec lesquels le dispositif de connexion est apte à coopérer.

La présente invention ne saurait toutefois se limiter aux moyens et configurations décrits et illustrés ici et elle s'étend également à tout moyen et toute configuration équivalents ainsi qu'à toute combinaison techniquement opérante de tels moyens.

## Revendications

1. Dispositif de connexion (8) pour véhicule destiné à relier un balai d'essuyage (2) s'étendant principalement longitudinalement à un bras d'essuie-glace (119, 270), ce dispositif de connexion (8) comprenant un module de connexion (12) et un organe de couverture (22) recouvrant au moins le module de connexion (12), **caractérisé en ce que** cet organe de couverture (22) comporte une cloison supérieure (206) et deux cloisons latérales (208) jointes par cette cloison supérieure (206), au moins une des cloisons latérales (208) comportant une zone de réception d'un type de bras d'essuie-glace (270) formée par un dégagement de matière (230) à partir de la cloison supérieure (206).

2. Dispositif de connexion (8) selon la revendication précédente, dans lequel le module de connexion (12) est formé par une base (14), montée en pivotement sur un connecteur (10), et une plateforme rotative (16), l'organe de couverture (22) comportant des éléments de fixation (216, 218) configurés pour coopérer avec des moyens de connexion (160, 168) solidaires de la plateforme rotative (16).

3. Dispositif de connexion (8) selon la revendication précédente, dans lequel le module de connexion (12) est configuré pour coopérer avec un adaptateur amovible (20), les moyens de connexion (160, 168) solidaires de la plateforme rotative (16) étant portés par cet adaptateur amovible (20).

4. Dispositif de connexion (8) selon l'une quelconque des revendications précédentes, dans lequel l'organe de couverture (22) comporte des ergots (228) et/ou des renfoncements (226) destinés à coopérer avec un capot (18) du module de connexion (12).

5. Dispositif de connexion (8) selon l'une des revendications précédentes, dans lequel au moins la cloison latérale (208) de l'organe de couverture (22), opposée à la cloison latérale (208) sur laquelle est disposée le dégagement de matière (230) formant ladite zone de réception, comporte un orifice traversant (234), cet orifice traversant (234) étant destiné à recevoir une tige (236) du bras d'essuie-glace (270).

6. Dispositif de connexion (8) selon la revendication précédente, dans lequel l'organe de couverture (22) est symétrique selon un plan de symétrie s'étendant entre les deux cloisons latérales (208) le long de la direction d'allongement longitudinale (L), une extrémité de la cloison latérale (208) au voisinage de la cloison supérieure (206) étant moins éloignée de ce plan de symétrie qu'une extrémité de la cloison latérale (208) à distance de cette cloison supérieure (206), l'orifice traversant (234) étant bordé par un pourtour (238) formant une surface d'appui plane sensiblement parallèle au plan de symétrie pour le bras d'essuie-glace (270).

7. Dispositif de connexion (8) selon l'une des revendications précédentes, dans lequel la cloison supérieure (206) comporte une rainure longitudinale (209), le dégagement de matière (230) formant une zone de réception d'un premier type de bras d'essuie-glace (270) et la rainure longitudinale (209) formant des moyens de réception d'un deuxième type de bras d'essuie-glace (119).

8. Dispositif de connexion (8) selon la revendication précédente en combinaison avec la revendication 2 ou la revendication 3, dans lequel la plateforme rotative (16) ou l'adaptateur amovible (20) participent à former au moins partiellement une cloison de fond de la rainure longitudinale (209).

9. Dispositif de connexion (8) selon l'une des revendications 7 ou 8, dans lequel au moins un barreau transversal (248, 250) relie les cloisons latérales (208) et participe à former partiellement une cloison de fond de la rainure longitudinale (209).

10. Système d'essuyage (1) comprenant un bras d'essuie-glace (119, 270) porteur d'un balai d'essuyage (2) relié au bras d'essuie-glace (119, 270) par l'intermédiaire du dispositif de connexion (8) selon l'une quelconque des revendications précédentes.
